# EUROPEAN PATENT APPLICATION

(11) **EP 2 110 524 A2**
(43) Date of publication of application: **21.10.2009**
(21) Application number: 08014434.8
(22) Date of filing: 13.08.2008
(51) Int. Cl.: F01N 1/08, F01N 1/24, F01N 3/04, F01N 3/20, B01D 53/00

(54) **Catalyst with bioreactor for combustion engines**

(30) Priority: 18.04.2008 BR PI0801753
(71) Applicant: Vanderlei Taques, José, 85010-300 Guarapuava PR (BR)
(72) Inventor: Vanderlei Taques, José, 85010-300 Guarapuava PR (BR)
(74) Representative: Lorente Berges, Ana

(57) **Abstract**

Dampers or mufflers are currently used for engine exhaust of conventional construction, for the reduction of noise levels within parameters predefined by the legislation. Further, conventional catalysts are also used to hold back some pollutants. The former have an effect on noise pollution only and the latter partially reduce environmental pollution levels.

It comprises a box (1) with an inlet opening (4) and an outlet opening (6) for the combustion gases, inner divisions (8), (10) and (11) and admission holes (9) which direct the gases into the operating chambers (13) and (14), with electrodes (15) and (16) where chemical reactions and filtering of pollution elements occur, therefore reducing Carbon Dioxide emissions.

## Description

The present Patent refers to the Internal Priority of the PI 0704373-2 of a damper or muffler collector for the exhaust of Diesel, gas, alcohol, natural gas vehicles' engines, and any other liquid fuel or fuel gas which may be used in internal combustion engines. It may be used for vehicle or stationary engines.

Dampers or mufflers are currently used for the exhaust of vehicles and engines of a conventional construction and are responsible for the reduction of noise levels within parameters predefined by the legislation. Further, conventional catalysts are used to hold back pollution and have a noise damper secondary effect. The former have an effect on noise pollution only and the latter partially reduce environmental pollution levels.

The system developed constitutes a solution for the effective reduction of gas pollutants and particulates, as well as the noise level resulting from the exhaust of internal combustion engines, offering some additional functions which will be discussed in the detailed descriptive report below.

For better clarification, the report Figures will include references, as follows:

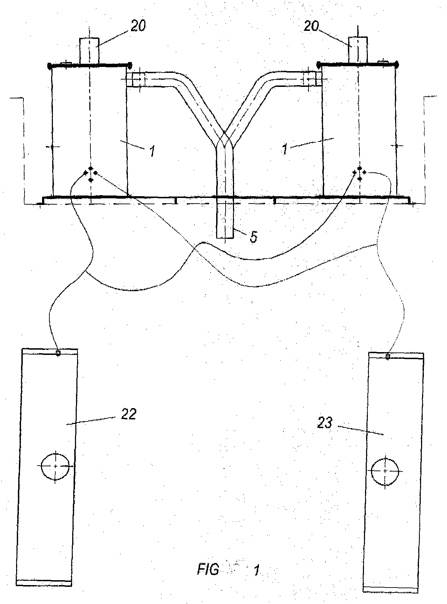

Figure 1 - shows a system schematic view;

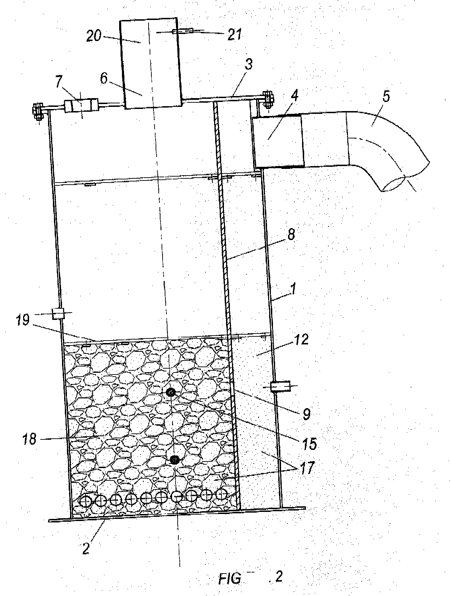

Figure 2 - shows a longitudinal section view of the reactor;

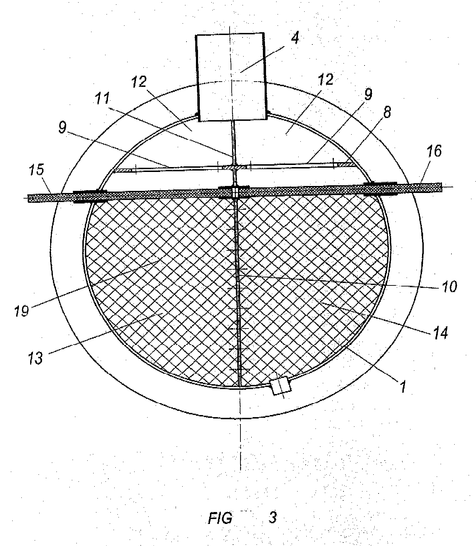

Figure 3 - shows a cross section view of the reactor.

The noise and pollution reducing device comprises a chamber constituted mainly by a vertical circular section metal tube (1), but not limited to a cylindrical format, which base is enclosed by a lower wall (2) and is equipped with a removable cover on the upper part (3), fixed to the cylinder by means of a flange with bolts; this cover allows its opening for disassembly and maintenance purposes, On the side of the upper part, there is an inlet opening (4), that receives the gases from the exhaust tube (5), resulting from burning of the engine fuel. On the central part of the cover (3) there is an opening with the exhaust tube (6), and a feeding opening or plug (7) through which the inner chamber is supplied with water and other chemical products of specific functions.

Inside the chamber there is a vertical wall (8), parallel to the gas inlet pipe section (4), which forces the gases down to the lower part, breaking through the admission holes (9). Perpendicular to this wall, there are two other vertical walls (10) and (11) which separate the gas flow coming from the inlet opening (4), positioned perpendicular to this opening and separating the inner part of the cylindrical piece, into smaller chambers. Each of the inlet chambers (12) directs part of the gases to chamber (13) and the other part to the (14), where the operational part of the system effectively takes place. On the lower part of the wall (10) there are holes which allow the communication of the solution between the two chambers.

Close to the admission holes (9) and in the inner part of the chambers (13) and (14), the electrodes are positioned (15) - constituting the anode which receives a positive voltage from the battery or alternator of said combustion engine - and (16) the cathode that receives a negative voltage. These electrodes are electrically insulated from the metal walls and are internally insulated in each chamber (13) and (14).

The chambers are internally filled with a solution (17) of water plus reagent products of different types and functions. In addition, there is a substrate of small stones (18), used as a filter to hold back heavy elements and particulates resulting from the combustion. The filtering material is not limited only to stones; other similar particulate material can be used, for example, ceramic material in general. A retention screen (19) holds the filtering element to prevent it from being pulled along by the gas flow.

In operation, gases containing mainly Carbon Dioxide, Carbon Monoxide, Sulfur Dioxide, heavy metals such as lead, hydrocarbons, aldehydes, etc., resulting from the burning of fossil fuel, will find the conditions to break the molecules which will be neutralized upon passing through the solution (17) or oxidized at a later burning stage.

In addition to filtering the particulates, this technology also reduces and even eliminates the Carbon Dioxide (CO₂) emissions. The Figures show this new technology, that uses a stone substrate. So, the gases upon entering into the system, hit against the stone substrate, repeating this procedure several times, hitting and deviating through the channels between the stones. The overheated stone and the gas hit and shift several times, from one side to the other inside the tube, separating atoms and molecules, making it return to its previous state. The Carbon Dioxide (CO₂) returns to its previous state before entering the engine admission tube, which was Oxygen (O₂). The atoms or molecules are not able to form secondary gases because they continue to hit against the stone substrate, before entering into the conventional ceramic catalyst, which has been set up immediately after the last layer of stone substrate. The stones inside the tube have a Carbon/Hydrocarbon content, are active under high-temperature, in addition to a significant electric current, that activates the stones and reduces the Carbon Dioxide (CO₂). Zircon stones, for example, are being used by the industry, as raw material for the ceramic support of some types of catalysts. Its electric power is also used in the manufacture of fireworks and tracer bullets. The Carbon Dioxide reduction is not due only to the Zircon stone and the particulate. If only the quantity of stones varies and the stones are arranged this way, purer stones will increase the electric power, and consequently, increase the Carbon content, i.e., more Hydrocarbons. Therefore, it will become more efficient and will need less stone substrate particulates. This configuration involves low cost and is easily found in nature. Its extraction does not harm the environment, does not produces pollutants and after being used, it may be recycled and used in civil construction. The substrate of stones has shown efficiency if applied by aqueous, water vapor or even dry means and even, with purer particulates. The stone substrate particulates break the Carbon Dioxide molecules, generating an artificial production of photosynthesis (CO₂ + H₂O = CH₂O+O₂). Photosynthesis occurs in the presence of Carbon Dioxide (CO₂), water (H₂O) and sunshine. The proposed technology, substitutes sunshine by the electric current of the particulates and their high temperature generates the same effect of the sun, however, it will take less time.

The objective of electrodes (15) and (16) in the chambers filled with the solution (17) is the formation of an electrolytic cell or cell, for the purpose of reducing the Carbon Dioxide used in the electrode electric current, which results in a series of chemical reactions, such as the water electrolysis, separating the Hydrogen in chamber (13) and the Oxygen in chamber (14) into small proportions, which follow separate ways and meet again inside a separate combustion chamber (20), placed after the outlet (6), and containing an ignition system (21). The conditions in this chamber allow the burning of the Hydrogen generated in the electrolytic cell, which combustion provides the generation of heat to neutralize other pollutants, such as the remains of gases partially burned during the poor burning of engine, remains of lube oil, etc. constituting a supplementary controlling effect.

The electrolytic cell or combustible cell also provides the conditions for reaction and break of the molecules of some polluting gases, which may be neutralized by using urea, a product rich in Ammonia and Nitrogen, which are used in pollution control; for better clarification, the objective of this urea technology is to reduce the Carbon Dioxide by using the electric current of the electrodes and nitrogenized bacteria. In some European countries, urea is used to reduce the NOX gas. Here, urea is used to reduce the Carbon Dioxide.

The fact of creating the conditions for chemical reactions to occur inside chambers (13) and (14), as well as, generate a medium in the presence of water, where several types of reagents and chemical products may be added, provides an appropriate device for pollution control. The use of a filtering material (18) such as stones, which is its best configuration, provides a filtering effect that retains the particulate elements.

The system may also operate without the electrolytic cell effect. In this event, it will operate as a catalyst and bioreactor, where both biologic tanks (22) and (23), which contain the solutions that will be pumped into the operating chamber, constituted of a cylindrical piece (1). The content of tank (22) is basically a solution of water and urea and in tank (23) there is solution of water and a biologic material, or, specifically, the nitrogenized bacteria.

These bacteria are known for their oxidizing effect, resulting in Ammonia oxidation, and reducing the Carbon Dioxide by means of a nitrification effect. The combustion gases resulting from fuel burning, go through the bioreactor inner chambers, which have a layer of stones (24), or ceramic material particles or similar, in the presence of the biologic solutions, coming from the tank (23) and Ammonia coming from tank (22), and have a neutralizing effect on the polluting gases, reducing the Carbon Dioxide by means of nitrification, oxidation of the Ammonia present in urea, holding back the particulates found in the stones and cleaning the engine exhaust gases.

Another benefit of this technology is that, to the water supplied to the bioreactor tanks, other natural or artificial products may be added, in order to generate pleasant odors such as clove, cinnamon, etc...

In addition, it is possible to adopt another application to help the phytosanitary control, by adding insecticide into the water in order to eliminate mosquitoes that cause illnesses such as dengue. The discharge water vapor would drag the insecticide into the air.

The system is also effective in reducing about 50% of the noise level of exhaust discharges, and may be a multifunctional device for pollution control, offering a variety of applications, constituting the adequate medium to create solutions in water, with different chemical products and it is in fact a test tube that provides the conditions for the development of products, reagents and formulas to neutralize pollution and its effects, using water as a major element.

## Claims

1. **"CATALYST WITH BIOREACTOR FOR COMBUSTION ENGINES",** CHARACTERISTICS: Constituted of a metal tube (1), which base is enclosed by a lower wall (2) and a removable cover on the upper part (3). On the side of the upper part, there is an inlet opening (4), that receives the gases from the exhaust tube (5), resulting from burning of the engine fuel. On the central part of the cover (3) there is an opening with the exhaust tube (6), and a feeding opening (7). Inside the chamber there is a vertical wall (8), parallel to the gas inlet pipe section (4), which forces the gases down to the lower part, breaking through the admission holes (9). Perpendicular to this wall, there are two other vertical walls (10) and (11) which separate the gas flow coming from the inlet opening (4), positioned perpendicular to this opening and separating the inner part of the cylindrical piece, into smaller chambers. Each of the inlet chambers (12) directs part of the gases to chamber (13) and the other part to the (14), where the operational part of the system effectively takes place.

2. **"CATALYST WITH BIOREACTOR FOR COMBUSTION ENGINES",** as described under Revindication One, It has, close to the admission holes (9) and in the inner part of chambers (13) and (14), electrodes (15) - constituting the anode which receives a positive voltage from the battery or alternator of said combustion engine - and (16) the cathode that receives the negative voltage. These electrodes are electrically insulated from the metal walls and are internally insulated in each chamber (13) e (14), filled with a solution (17) basically constituted of water and reagent products of different types and functions and in addition, a filtering substrate (18) for the purpose of holding back heavy elements and particulates, retained by the screen (19).

3. **"CATALYST WITH BIOREACTOR FOR COMBUSTION ENGINES",** as described under Revindication Two, it has in the inner part of chambers (13) and (14), a formation of electrolytic cells which produce a number of chemical reactions, such as the water electrolysis, separating the Hydrogen in chamber (13) and the Oxygen in chamber (14) in small proportions, which follow separate ways and meet again inside a separate combustion chamber (20), placed after the outlet (6), and containing an ignition system (21).

4. **"CATALYST WITH BIOREACTOR FOR COMBUSTION ENGINES",** as described under Revindication One, it operates as a catalyst and bioreactor, being equipped with a tank (22) which basically contains a water and urea solution that supplies Ammonia for the processing and tank (23) where there is a solution of water and a biologic material, or, specifically, the nitrogenized bacteria, which are pumped into the reactor, inside the cylindrical piece (1), where there is a layer of stones (24) or particulate material of ceramic origin in chambers (13) and (14).

5. **"CATALYST WITH BIOREACTOR FOR COMBUSTION ENGINES",** as described under Revindication One, it has a multifunctional device for pollution control, offering a variety of applications, constituting the adequate medium to create chemical solutions in a liquid medium, providing the conditions for the development of products, reagents and formulas to neutralize pollution and its effects, using water as a major element and further, reducing Carbon Dioxide emissions.

6. **"CATALYST WITH BIOREACTOR FOR COMBUSTION ENGINES",** as described under Revindication One is a device constituted of a substrate of stones that has shown efficiency if applied by aqueous, water vapor or even dry means and even, with purer particulates.
